# EUROPÄISCHE PATENTSCHRIFT

(11) **EP 1 341 730 B1**
(45) Veröffentlichungstag und Bekanntmachung des Hinweises auf die Patenterteilung: **10.08.2005**
(21) Anmeldenummer: 01270504.2
(22) Anmeldetag: 14.12.2001
(51) Int. Cl.: C03B 33/09, C03B 33/07, B23K 26/40

(54) **VERFAHREN ZUM DURCHTRENNEN VON BAUTEILEN AUS GLAS, KERAMIK, GLASKERAMIK ODER DERGLEICHEN DURCH ERZEUGUNG EINES THERMISCHEN SPANNUNGSRISSES AN DEM BAUTEIL ENTLANG EINER TRENNZONE**
METHOD FOR CUTTING COMPONENTS MADE OF GLASS, CERAMIC, GLASS CERAMIC OR THE LIKE BY GENERATING THERMAL ABLATION ON THE COMPONENT ALONG A CUT ZONE
PROCEDE POUR DECOUPER DES COMPOSANTS CONSTITUES DE VERRE, DE CERAMIQUE, DE VITROCERAMIQUE OU D'UN MATERIAU ANALOGUE PAR REALISATION D'UNE FENTE THERMIQUE DANS LE COMPOSANT LE LONG D'UNE ZONE DE DECOUPAGE

(30) Priorität: 15.12.2000 DE 10062725
(43) Veröffentlichungstag der Anmeldung: 10.09.2003
(73) Patentinhaber: LZH Laserzentrum Hannover E.V., 30419 Hannover (DE)
(72) Erfinder: HESENER, Hanno, 26871 Papenburg (DE)
(74) Vertreter: Wagner, Carsten
(86) Internationale Anmeldenummer: PCT/EP2001/014729
(87) Internationale Veröffentlichungsnummer: WO 2002/048059

(56) Entgegenhaltungen:
- EP-A- 0 448 168
- JP-A- 2000 281 373
- SHEPELOV G V ET AL: "CUTTING SHEET GLASS WITH THE BEAM OF A SOLID-STATE LASER" WELDING INTERNATIONAL, WELDING INSTITUTE. ABINGTON, GB, Bd. 14, Nr. 12, Dezember 2000 (2000-12), Seiten 988-991, XP000998828 ISSN: 0950-7116

## Beschreibung

Die Erfindung betrifft ein Verfahren der im Oberbegriff des Anspruchs 1 genannten Art zum Durchtrennen von Bauteilen aus Glas, Keramik, Glaskeramik oder dergleichen durch Erzeugung eines thermischen Spannungsrisses an dem Bauteil an einer Trennzone.

Verfahren zum Durchtrennen von Bauteilen aus Glas sind beispielsweise durch DE 197 15 537 A1, DE 196 16 327 A1, WO 98/00266 A1, DE 44 05 203 A1 und WO 93/20015 A1 bekannt.

Durch DE 43 05 106 A1 ist ein Verfahren bekannt, bei dem ein Laser einen Laserstrahl auf eine linienförmige Trennzone eines Bauteiles richtet. Bei dem bekannten Verfahren wird das Bauteil mittels des Laserstrahles entlang der Trennzone dadurch erwärmt, daß das Glas die Laserstrahlung an seiner Oberfläche absorbiert. Hierdurch entsteht entlang der Trennzone ein thermischer Spannungsriß, der dazu führt, daß das Bauteil in der gewünschten Weise entlang der Trennzone durchtrennt wird.

Ein Nachteil des bekannten Verfahrens besteht darin, daß nur solche Strahlungsquellen verwendet werden, deren Strahlung von dem Glas überwiegend absorbiert wird.

Durch Patent Abstracts of Japan, Veröffentlichungs-Nr. 10 244 386 A ist ein Verfahren der betreffenden Art zum Durchtrennen von Bauteilen durch Erzeugung eines thermischen Spannungsrisses an dem Bauteil an einer Trennzone bekannt, bei dem ein Laserstrahl auf die Trennzone gerichtet und die Wellenlänge der Laserstrahlung so gewählt wird, daß die Laserstrahlung von dem Bauteil unter Teilabsorption teilweise transmittiert wird. Bei dem bekannten Verfahren wird der Laserstrahl derart auf das Bauteil gerichtet, daß der Laserstrahl von dem Bauteil gleichzeitig oder zeitlich aufeinanderfolgend entlang der Trennzone im wesentlichen an der gleichen Stelle oder an zueinander gering beabstandeten Stellen wenigstens zweimal teilweise transmittiert wird.

Aus der Druckschrift Shepelov G V et al "Cutting Sheet Glass with the Beam of a Solid-State Laser", Welding International, Welding Institute, Abington, Großbritannien, Band 14, Nr. 12, Dezember 2000 (2000-12), Seiten 988 - 991, XP000998828 ISSN: 0950-7116, ist ein Verfahren zum Trennen von Glas unter Verwendung eines Festkörperlasers bekannt, bei dem der Laserstrahl im Material teilweise absorbiert wird. Um eine optimale Temperaturverteilung im Glas zu erzeugen, werden zwei Laserstrahlen gleicher Stärke verwendet, deren Auftreffpunkte derart voneinander beabstandet angeordnet sind, daß im Material eine optimierte Temperaturverteilung zur Erzeugung der erforderlichen mechanischen Spannung erzeugt wird.

Der Erfindung liegt die Aufgabe zugrunde, ein Verfahren der im Oberbegriff des Anspruchs 1 genannten Art anzugeben, das wirtschaftlicher durchführbar ist.

Diese Aufgabe wird durch die im Anspruch 1 angegebene Lehre gelöst.

Die Erfindung löst die zugrundeliegende Aufgabe auf überraschend einfache Weise dadurch, daß gleichzeitig wenigstens zwei Bauteile bearbeitet werden, die in Strahlrichtung hintereinander angeordnet sind. Auf diese Weise ist das erfindungsgemäße Verfahren wesentlich rationeller und damit wirtschaftlicher gestaltet. Werden beispielsweise gleichartige Bauteile bearbeitet, so sind die Taktzeiten bei der Durchführung des erfindungsgemäßen Verfahrens um einen der Anzahl der gleichzeitig bearbeiteten Bauteile entsprechenden Faktor verkürzt.

Das erfindungsgemäße Verfahren ist nicht nur zur gleichzeitigen Bearbeitung mehrerer gleichartiger Bauteile geeignet, sondern darüber hinaus auch zur Bearbeitung von Bauteilen, die aus mehreren Einzelbauteilen bestehen, beispielsweise zum Durchtrennen von Verbundglasscheiben, die aus zwei miteinander verklebten Einzelglasscheiben bestehen, zwischen denen sich eine Kunststoffolie befindet.

Die Trennzone kann eine beliebige geeignete Geometrie aufweisen, beispielsweise als gerade, polygonale oder in beliebiger Weise bogenförmig gekrümmte Trennlinie ausgebildet sein.

Beim Durchtrennen von Bauteilen mittels Laserstrahlung durch Erzeugung eines thermischen Spannungsrisses an dem Bauteil ist es erforderlich, zunächst in einer Startzone einen Startriß zu bilden, von dem ausgehend sich im weiteren Verlauf des Trennvorganges die Trennzone ausbildet. Der Startriß kann beispielsweise bei der Bearbeitung einzelner Bauteile dadurch gebildet werden, daß die Oberfläche des Bauteils in der Startzone mechanisch geschädigt wird, beispielsweise durch Einbringen einer Kerbe mittels eines Schneidwerkzeugs. Dieses Verfahren ist bei einem Verfahren gemäß Anspruch 1 in der Regel nicht anwendbar, da zur Erzeugung des Startrisses ein Zugang zu den Oberflächen sämtlicher zu durchtrennender Bauteile erforderlich ist. Da bei dem erfindungsgemäßen Verfahren gleichzeitig wenigstens zwei in Strahlrichtung hintereinander geordnete Bauteile bearbeitet werden, ist bei dem erfindungsgemäßen Verfahren in der Regel nur die Oberfläche des in Strahlrichtung ersten Bauteiles zugänglich.

Durch WO 01/32571 A1 ist ein Verfahren der im Oberbegriff des Anspruchs 2 genannten Art zum Durchtrennen von Bauteilen aus Glas durch Erzeugung eines thermischen Spannungsrisses an dem Bauteil an einer Trennzone bekannt, bei dem zu Beginn des Trennvorganges mittels der Laserstrahlung in einer Startzone des Spannungsrisses ein Startriß an dem Bauteil erzeugt wird, von dem im weiteren Verlauf des Trennvorganges die Trennzone ausgeht.

Bei dem bekannten Verfahren erfolgt die Bildung eines Startrisses dadurch, daß mittels der Laserstrahlung Material an der Oberfläche des Bauteiles abgetragen und so eine Nut gebildet wird, so daß sich in der gewünschten Weise der Startriß ausbildet.

Auch dieses bekannte Verfahren setzt einen Zugang zu den Oberflächen jedes Bauteiles voraus, an dem ein Startriß erzeugt werden soll. Das bekannte Verfahren ist daher bei einem Verfahren gemäß Anspruch 1 nicht anwendbar.

Dementsprechend liegt der Erfindung ferner die Aufgabe zugrunde, ein Verfahren der im Oberbegriff des Anspruchs 2 genannten Art anzugeben, das die Erzeugung eines Startrisses auch an solchen Bauteilen ermöglicht, deren Oberfläche nicht zugänglich ist, wie dies bei einem Verfahren gemäß Anspruch 1 für die in Strahlrichtung hinteren Bauteile der Fall ist.

Diese Aufgabe wird durch die im Anspruch 2 angegebene Lehre gelöst. Hierbei werden die Intensität und/oder das Strahlprofil und/oder der Fokus des Laserstrahles derart gesteuert, daß der Startriß im wesentlichen ohne Materialabtrag an wenigstens zwei Bauteilen gebildet wird. Das Verfahren gemäß Anspruch 2 ermöglicht es, Startrisse auch an solchen Bauteilen zu bilden, deren Oberfläche nicht frei zugänglich ist. Da der Startriß ausschließlich durch entsprechende Steuerung der Intensität und/oder des Strahlprofils und/oder des Fokus des Laserstrahles gesteuert wird, ist eine Kühlung der Bauteile während der Bildung des Startrisses nicht erforderlich.

Eine Ausgestaltung des Grundgedankens der Lehre des Anspruchs 2 sieht vor, daß der Laserstrahl bei der Erzeugung des Startrisses auf einen Bereich unterhalb der Oberfläche eines Bauteiles fokussiert wird. Dies ermöglicht auf zuverlässige Weise die Bildung eines Startrisses ohne Materialabtrag an der Oberfläche eines Bauteiles.

Grundsätzlich kann der Startriß an einem Rand der Bauteile gebildet werden. Insbesondere dann, wenn ein Teil mit einer geschlossenen Kontur aus einem Bauteil herausgetrennt werden soll, ist es zweckmäßig, daß der Startriß an einer zu den Rändern der Bauteile beabstandeten Stelle gebildet wird.

Um im Bereich des Startrisses eine möglichst gleichmäßige Schnittkante zu erhalten, ist es zweckmäßig, daß ein Startriß erzeugt wird, der sich in Strahlrichtung der Laserstrahlung im wesentlichen durch die gesamten Bauteile hindurch erstreckt.

Eine andere Weiterbildung der Lehre des Anspruchs 2 sieht vor, daß der Laserstrahl zur Weiterführung des von der Startzone ausgehenden thermischen Spannungsrisses auf die Startzone gerichtet und im weiteren Verlauf des Trennvorganges entlang der Trennzone bewegt wird. Bei dieser Ausführungsform führt der Laser den von dem Startriß ausgehenden thermischen Spannungsriß unmittelbar weiter, indem der Strahlfleck des Laserstrahles jeweils auf die Spitze des sich ausbildenden Spannungsrisses gerichtet wird.

Alternativ hierzu kann der Laserstrahl zur Weiterführung des von der Startzone ausgehenden thermischen Spannungsrisses jedoch auch auf einen zu der Startzone beabstandeten Bereich gerichtet und so gesteuert werden, daß sich der thermische Spannungsriß im weiteren Verlauf des Trennvorganges entlang der Trennzone ausbildet. Bei dieser Ausführungsform dient der Laserstrahl dazu, die Bauteile entfernt von dem Startriß so zu erwärmen, daß sich in den Bauteilen ein definiertes Temperaturfeld bildet, das dazu führt, daß sich der Spannungsriß entlang einer gewünschten Trennzone, beispielsweise Trennlinie, ausbildet.

Entsprechend den jeweiligen Anforderungen können die Bauteile während des Trennvorganges zueinander beabstandet sein oder aneinander anliegen oder miteinander verbunden sein, insbesondere fest miteinander verbunden sein. Im erstgenannten Fall kann beispielsweise eine Halterung vorgesehen sein, die die Bauteile während des Trennvorganges zueinander beabstandet hält. Insbesondere dann, wenn die Bauteile plan ausgebildet sind, können diese jedoch auch während des Trennvorganges aneinander anliegen.

Die mittels des erfindungsgemäßen Verfahrens zu durchtrennenden Bauteile sind in weiten Grenzen wählbar. Eine besonders vorteilhafte Weiterbildung der erfindungsgemäßen Lehre sieht vor, daß die Bauteile ein Verbundbauteil, insbesondere eine Verbundglasscheibe bilden. Es hat sich gezeigt, daß das erfindungsgemäße Verfahren besonders gut zum Durchtrennen von Verbundglasscheiben geeignet ist, die aus zwei miteinander verklebten Glasscheiben bestehen, zwischen denen sich eine Kunststoffolie befindet. Erfindungsgemäß wird somit unter mehreren gleichzeitig bearbeiteten Bauteilen auch ein einzelnes Bauteil verstanden, das aus mehreren, in Strahlrichtung hintereinander angeordneten einzelnen Bauteilen besteht, die fest miteinander verbunden sind, wie dies beispielsweise bei einer Verbundglasscheibe der Fall ist. Das erfindungsgemäße Verfahren ermöglicht beispielsweise auch das Schneiden von Gläsern von LCD-Anzeigen, die in der Regel aus zwei übereinander liegenden Glasscheiben bestehen, zwischen denen ein Flüssigkristall angeordnet ist.

Eine andere Weiterbildung des erfindungsgemäßen Verfahrens sieht vor, daß eines der zu durchtrennenden Bauteile eine Beschichtung eines anderen der zu durchtrennenden Bauteile ist. Bei dieser Ausführungsform können beispielsweise speziell beschichtete Flachgläser, insbesondere in Form von Spiegelgläsern durchtrennt werden. Derartige Spiegelgläser bestehen in der Regel aus einer Flachglasscheibe, einer aufgedampften Silber- oder Aluminiumbeschichtung sowie einer Trägerschicht zum Schutz der Beschichtung. Das erfindungsgemäße Verfahren erlaubt hierbei sowohl das Durchtrennen der Glasscheibe als auch der Trägerschicht. Bei dieser Ausführungsform des erfindungsgemäßen Verfahrens können beispielsweise auch Rückspiegel von Kraftfahrzeugen geschnitten werden.

Andere zweckmäßige Ausführungsformen des erfindungsgemäßen Verfahrens sehen vor, daß die Bauteile Glasscheiben, insbesondere Planglasscheiben, oder rotationssymmetrische Bauteile aus Glas sind und/oder daß die Bauteile aus Borosilikatglas oder Kalk-Natron-Glas bestehen.

Die erfindungsgemäße Lehre sieht vor, daß Reflexionsmittel verwendet werden, die wenigstens einen auf der dem Laser abgewandten Seite des Bauteiles angeordneten ersten Reflektor aufweisen, der durch das Bauteil transmittierte Laserstrahlung auf die Trennzone reflektiert. Bei dieser Ausführungsform wird die Strahlung zunächst von dem Bauteil transmittiert und nach Transmission durch das Bauteil von dem ersten Reflektor wenigstens einmal reflektiert, so daß sie das Bauteil im wesentlichen an der gleichen Stelle entlang der Trennzone wenigstens zweimal durchquert bzw. von dem Bauteil wenigstens zweimal unter Teiltransmission teilweise absorbiert wird.

Grundsätzlich ist es ausreichend, wenn bei der vorgenannten Ausführungsform die Reflexionsmittel lediglich einen Reflektor aufweisen, der die Strahlung nach Transmission durch die Trennzone auf die Trennzone reflektiert, so daß die Strahlung lediglich einmal reflektiert wird. Eine vorteilhafte Weiterbildung der erfindungsgemäßen Lehre sieht vor, daß die Reflexionsmittel wenigstens einen zweiten Reflektor aufweisen, der auf der dem Laser zugewandten Seite des Bauteiles angeordnet ist, wobei der erste Reflektor die Laserstrahlung durch die Trennzone hindurch auf den zweiten Reflektor reflektiert und wobei der zweite Reflektor die von dem ersten Reflektor reflektierte Strahlung auf die Trennzone reflektiert. Bei dieser Ausführungsform wird die von dem Laser erzeugte Laserstrahlung mehrfach reflektiert, so daß sie dementsprechend mehrfach von den Bauteilen entlang der Trennzone teilabsorbiert wird. Auf diese Weise ist eine schnelle und intensive Erwärmung des Bauteils an der jeweils bestrahlten Stelle der Trennzone ermöglicht.

Eine Weiterbildung der vorgenannten Ausführungsform sieht vor, daß der zweite Reflektor die Laserstrahlung auf den ersten Reflektor zurückreflektiert. Bei dieser Ausführungsform wird die Strahlung mehrfach zwischen dem ersten Reflektor und dem zweiten Reflektor hin- und herreflektiert, so daß mit einer einfachen und kostengünstigen Vorrichtung eine mehrfache Reflexion der Laserstrahlung durch die Bauteile und damit ein vielfaches Durchqueren der Bauteile und eine entsprechend intensive Erwärmung des Bauteils ermöglicht ist.

Grundsätzlich ist es ausreichend, wenn der einfallende Laserstrahl und der von dem ersten Reflektor reflektierte Laserstrahl an zueinander beabstandeten Stellen entlang der Trennzone auf die Bauteile auftreffen bzw. wenn der von dem ersten Reflektor auf den zweiten Reflektor reflektierte Laserstrahl und der von dem zweiten Reflektor auf den ersten Reflektor zurückreflektierte Laserstrahl an zueinander beabstandeten Stellen der Trennzone auf die Bauteile auftreffen, sofern hierbei entlang der Trennzone durchgängig eine zur Ausbildung des thermischen Spannungsrisses ausreichende Erwärmung der Bauteile bewirkt ist. Eine besonders vorteilhafte Weiterbildung sieht jedoch vor, daß der einfallende Laserstrahl und der von dem ersten Reflektor reflektierte Laserstrahl und/oder der von dem ersten Reflektor auf den zweiten Reflektor reflektierte Laserstrahl und der von dem zweiten Reflektor auf den ersten Reflektor zurückreflektierte Laserstrahl entlang der Trennzone im wesentlichen auf die gleiche Stelle der Bauteile auftreffen. Auf diese Weise ergibt sich an der Stelle, an der der einfallende und der reflektierte Strahl gemeinsam auf die Bauteile auftreffen, eine besonders schnelle und intensive Erwärmung der Bauteile.

Zweckmäßigerweise ist bzw. sind der erste Reflektor und ggf. der zweite Reflektor in Strahlrichtung zu den Bauteilen beabstandet. Auf diese Weise ist verhindert, daß in unerwünschter Weise über den Reflektor bzw. die Reflektoren Wärme von den Bauteilen abgeführt wird.

Der Laser ist zweckmäßigerweise ein Nd:YAG-Laser oder ein Diodenlaser. Derartige Laser sind besonders kostengünstig. Obwohl das Laserlicht dieser Laser von Glas im wesentlichen transmittiert und nur in geringem Maße absorbiert wird, ist ihre Verwendung zum Durchtrennen von Bauteilen aus Glas oder anderen spröden Materialien durch die erfindungsgemäße Lehre ermöglicht.

Zweckmäßigerweise beträgt die Wellenlänge der Laserstrahlung etwa 500 bis etwa 5.000 nm. Laserstrahlung dieser Wellenlänge wird von Glas zwar überwiegend transmittiert, ermöglicht jedoch aufgrund der erfindungsgemäßen Lehre gleichwohl in ausreichendem Maße eine Erwärmung des Materiales des Bauteiles.

Um beispielsweise linienförmige Trennzonen an den Bauteilen zu bilden, sieht eine andere Weiterbildung vor, daß die Bauteile und der Laser während des Bearbeitungsvorganges relativ zueinander bewegt werden.

Bei der vorgenannten Ausführungsform ist es zweckmäßig, daß die Bauteile und der Laser relativ zueinander zweidimensional bewegt werden, wobei die Bauteile in einer ersten Richtung (x-Richtung) und der Laser in einer zu der ersten Richtung (x-Richtung) im wesentlichen senkrechten zweiten Richtung (y-Richtung) bewegt wird. Auf diese Weise sind zweidimensionale Bewegungen des Lasers und der Bauteile relativ zueinander mit einer einfachen und kostengünstigen Vorrichtung ermöglicht.

Eine Weiterbildung der Ausführungsform, bei der der Laserstrahl zwischen dem ersten Reflektor und dem zweiten Reflektor hin-.und herreflektiert wird sieht vor, daß der zweite Reflektor derart ausgebildet ist, daß er die Laserstrahlung in Abhängigkeit von der Polarisation entweder transmittiert oder reflektiert, daß der Laser die Laserstrahlung von der dem ersten Reflektor abgewandten Seite einstrahlt, wobei die Polarisation der Laserstrahlung derart gewählt ist, daß der zweite Reflektor den einfallenden Strahl transmittiert und daß der erste Reflektor die Polarisation der Laserstrahlung derart beeinflußt, daß der zweite Reflektor den Laserstrahl bei einem darauf folgenden Auftreffen des Laserstrahles reflektiert. Bei dieser Ausführungsform ist mit einem einfachen Aufbau eine mehrfache Reflexion des Laserstrahles auf dieselbe Stelle des Bauteiles ermöglicht.

Eine andere Weiterbildung der erfindungsgemäßen Lehre sieht vor, daß das Strahlprofil des Laserstrahles durch Strahlformungsmittel geformt wird. Auf diese Weise ist eine Anpassung des Profils des Laserstrahles und damit des Strahlflecks auf den Bauteilen entsprechend den jeweiligen Anforderungen in weiten Grenzen ermöglicht.

Andere Weiterbildungen des erfindungsgemäßen Verfahrens sehen vor, daß die Trennzone eine geschlossene Kontur begrenzt und/oder daß ein Teil aus den Bauteilen herausgetrennt wird. Bei diesen Ausführungsformen ist beispielsweise das Ausschneiden von Teilen aus den Bauteilen ermöglicht.

Eine andere Weiterbildung der erfindungsgemäßen Lehre sieht vor, daß der Laserstrahl schräg auf die Bauteile gerichtet wird, derart, daß sich an der Trennzone eine Fase an den Bauteilen bildet. Bei dieser Ausführungsform werden die Schnittkanten des Bauteiles angefast, so daß bei einer thermisch hervorgerufenen Wärmeausdehnung des Glases die Schnittkanten aufeinander gleiten können, so daß durch ein Herausheben des abgetrennten Teils der Bauteile kein Druck mehr auf die Bauteile ausgeübt wird. Eine Beschädigung der Schnittkanten ist dadurch zuverlässig vermieden.

Eine andere Ausführungsform des erfindungsgemäßen Verfahrens sieht vor, daß die Bauteile während des Trennvorganges derart mit mechanischen Spannungen beaufschlagt wird, daß die Bildung des Spannungsrisses gefördert ist. Auf diese Weise ist eine gezielte Führung des Spannungsrisses entlang der Trennzone ermöglicht, um beispielsweise einen Endabschnitt des Spannungsrisses mit dem Startriß zusammenzuführen, wenn die Trennzone eine geschlossene Kontur begrenzt. Die mechanischen Spannungen können insbesondere Biegespannungen sein, die beispielsweise dadurch in die Bauteile eingebracht werden, daß beim Heraustrennen eines Teiles aus den Bauteilen das herauszutrennende Teil auf einer Auflage aufliegt, während an die Trennzone angrenzende Bereiche der Bauteile nicht abgestützt sind. Auf diese Weise entstehen Biegespannungen, aufgrund derer sich die Bauteile entfernt von der Trennzone langsam nach unten biegt, während der abzutrennende Teil auf der Auflage fixiert ist. Das Einbringen mechanischer Spannungen kann passiv erfolgen, beispielsweise dadurch, daß ein abzutrennender Teil der Bauteile auf einer Auflage aufliegt, wie oben angegeben. Die Spannungen können jedoch auch aktiv eingebracht werden, indem beispielsweise mechanische Rollen oder Biegevorrichtungen oder Pneumatikeinheiten mit Saugklemmen sowie Zug- und Druckeinheiten verwendet werden. Das Verfahren nach Anspruch 26 ist besonders gut im Zusammenhang mit den erfindungsgemäßen Verfahren nach Anspruch 1 und 2 anwendbar. Es ist jedoch auch bei beliebigen anderen Verfahren zum Durchtrennen von Bauteilen aus Glas, Keramik, Glaskeramik oder dergleichen durch Erzeugung eines thermischen Spannungsrisses an den Bauteilen an einer Trennzone geeignet, beispielsweise bei Verfahren nach dem Stand der Technik, bei denen bei einem Trennvorgang jeweils nur ein Bauteil bearbeitet wird.

Grundsätzlich ist es nicht erforderlich, die Bauteile bei der Durchführung des erfindungsgemäßen Verfahrens zu kühlen. Insbesondere kann die Bildung eines Startrisses ungekühlt erfolgen. Falls entsprechend den jeweiligen Anforderungen erforderlich, kann die Bauteile jedoch während und/oder nach Beendigung des Trennvorganges gekühlt werden, wie dies eine Ausführungsform vorsieht. Eine solche Kühlung ist grundsätzlich aus dem Stand der Technik bekannt, dient, anders als im Stand der Technik, bei der Durchführung des erfindungsgemäßen Verfahrens jedoch nicht dazu, die Bildung des Spannungsrisses hervorzurufen oder zu fördern, sondern vielmehr dazu, die Bauteile abzukühlen und eine Wärmedehnung des Bauteiles zu verringern. Auf diese Weise sind durch übermäßige Wärmedehnung hervorgerufene Beschädigungen der Bauteile zuverlässig vermieden. Außerdem ist auf diese Weise beim Abtrennen eines Teiles aus den Bauteilen das Abtrennen erleichtert.

Entsprechend den jeweiligen Anforderungen kann ein Laserstrahl mit einem symmetrischen oder asymmetrischen Strahlprofil verwendet werden, wobei zur Erzeugung des Strahlprofiles insbesondere diffraktive, holographische oder brechende Optiken oder ein Laserscanner verwendet werden können. Auf diese Weise ist die Bildung eines nahezu beliebigen gewünschten Strahlprofils auf einfache Weise ermöglicht.

Grundsätzlich kann das Strahlprofil des Laserstrahles während des Trennvorganges unverändert bleiben. Falls entsprechend den jeweiligen Anforderungen erforderlich, kann das Strahlprofil des Laserstrahles während des Trennvorganges zeitlich und/oder räumlich verändert werden, wie dies eine Weiterbildung vorsieht.

Eine außerordentlich vorteilhafte Weiterbildung des erfindungsgemäßen Verfahrens sieht Regelungsmittel zur Regelung der Leistung und/oder des Strahlprofiles und/oder des Fokus des Laserstrahles und/oder der räumlichen Lage des Strahlflecks auf dem Bauteil während des Trennvorganges vor. Auf diese Weise ist eine Online-Regelung des Trennvorganges geschaffen, so daß der Trennvorgang gezielt beeinflußbar ist.

Eine Weiterbildung der Ausführungsform mit den Regelungsmitteln sieht Sensormittel vor, die mechanische Spannungen in den Bauteilen detektieren, insbesondere eine räumliche Verteilung mechanischer Spannungen in den Bauteilen. Eine Detektion mechanischer Spannungen kann beispielsweise unter Verwendung einer Einrichtung zur Erkennung der Spannungs-Doppelbrechung im Glas bestehen, die auf einer Polarisationsmessung beruht. Dabei werden im Durchlichtbetrieb mittels zweier gekreuzter Polarisatoren Bilder aufgenommen und mit Hilfe einer Auswerteeinheit ausgewertet. In Abhängigkeit von dem Auswertungsergebnis können dann beispielsweise die Leistung des Lasers sowie andere Prozeßparameter, beispielsweise das Strahlprofil, die Intensitätsverteilung und die räumliche Lage des Strahlflecks auf dem Bauteil, geregelt werden.

Eine andere Weiterbildung der Ausführungsform mit den Regelungsmitteln sieht Sensormittel vor, die die Temperatur in den Bauteilen messen, insbesondere eine räumliche Verteilung der Temperatur in den Bauteilen. Auf diese Weise kann die Temperaturverteilung in den Bauteilen ermittelt und entsprechend den jeweiligen Anforderungen geregelt werden, um in der gewünschten Weise einen thermischen Spannungsriß entlang der Trennzone zu erzeugen.

Bei der vorgenannten Ausführungsform weisen die Sensormittel zweckmäßigerweise eine Thermokamera oder ein Pyrometer auf. Derartige Einrichtungen ermöglichen auf einfache und präzise Weise eine Temperaturmessung.

Eine andere Weiterbildung des erfindungsgemäßen Verfahrens sieht vor, daß die Trenr.zonen an in Strahlrichtung aufeinanderfolgenden Bauteilen in Richtung der Oberflächen der Bauteile zueinander beabstandet sind. Auf diese Weise lassen sich beispielsweise mehrere in Strahlrichtung hintereinander angeordnete Bauteile treppenstufenartig durchtrennen.

Die Erfindung wird nachfolgend anhand der beigefügten Zeichnung näher erläutert, in der Ausführungsbeispiele von Einrichtungen zur Durchführung des erfindungsgemäßen Verfahrens dargestellt sind.

Es zeigt:
- Fig. 1: in stark schematisierter Darstellung ein erstes Ausführungsbeispiel einer zur Durchführung des erfindungsgemäßen Verfahrens geeigneten Einrichtung,
- Fig. 2: in gleicher Darstellung wie Fig. 1 das Ausführungsbeispiel gemäß Fig. 1 zur Verdeutlichung der Reflexion der Strahlung,
- Fig. 3: in gleicher Darstellung wie Fig. 1 ein zweites Ausführungsbeispiel einer zur Durchführung des erfindungsgemäßen Verfahrens geeigneten Einrichtung,
- Fig. 4: in stark schematisierter Perspektivansicht ein drittes Ausführungsbeispiel einer zur Durchführung des erfindungsgemäßen Verfahrens geeigneten Einrichtung,
- Fig. 5: in gleicher Darstellung wie Fig. 4 ein viertes Ausführungsbeispiel einer zur Durchführung des erfindungsgemäßen Verfahrens geeigneten Einrichtung,
- Fig. 6: in gleicher Darstellung wie Fig. 4 ein fünftes Ausführungsbeispiel einer zur Durchführung des erfindungsgemäßen Verfahrens geeigneten Einrichtung,
- Fig. 7: in gleicher Darstellung wie Fig. 4 ein sechstes Ausführungsbeispiel einer zur Durchführung des erfindungsgemäßen Verfahrens geeigneten Einrichtung,
- Fig. 8: in gleicher Darstellung wie Fig. 4, jedoch in kleinerem Maßstab das Ausführungsbeispiel gemäß Fig. 4,
- Fig. 9: verschiedene mögliche Strahlprofile des Laserstrahles und
- Fig. 10: in ähnlicher Darstellung wie Fig. 4 das Ausführungsbeispiel gemäß Fig. 4 zur Verdeutlichung eines erfindungsgemäßen Verfahrens zur Erzeugung eines Startrisses.

Gleiche bzw. sich entsprechende Bauteile sind in den Figuren der Zeichnung mit den gleichen Bezugszeichen versehen.

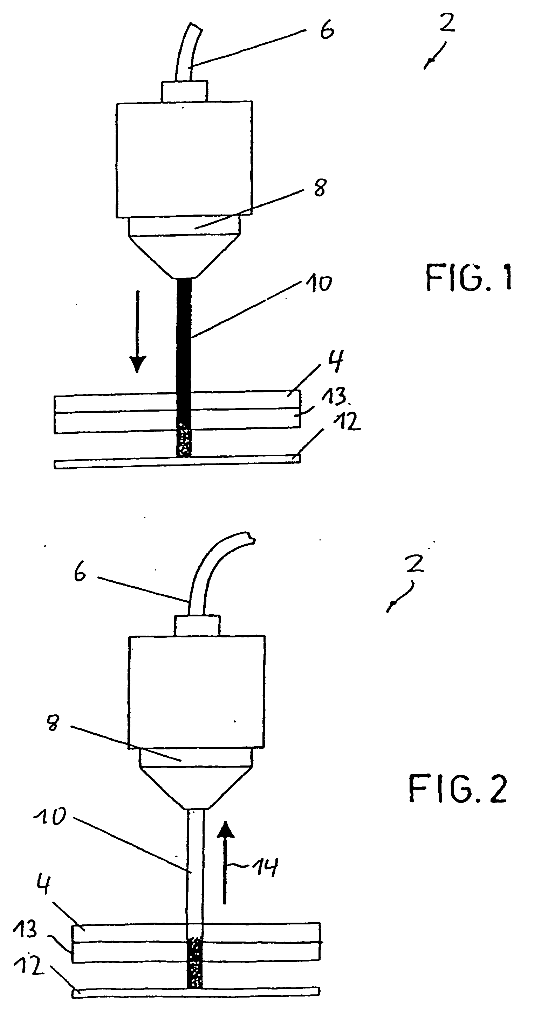

In Fig. 1 ist ein erstes Ausführungsbeispiel einer zur Durchführung des erfindungsgemäßen Verfahrens geeigneten Einrichtung 2 zum Durchtrennen eines Bauteiles 4 aus Glas durch Erzeugung eines thermischen Spannungsrisses in dem Bauteil 4 entlang einer Trennlinie dargestellt, wobei das Bauteil bei diesem Ausführungsbeispiel durch eine Planglasscheibe aus Borosilikatglas gebildet ist. Die Einrichtung 2 weist einen in der Zeichnung nicht dargestellten Laser, beispielsweise einen Nd:YAG-Laser, auf, der Laserlicht in eine Lichtleitfaser 6 einstrahlt, die an einem Bearbeitungskopf 8 gehalten ist. Der Bearbeitungskopf 8 richtet einen aus der Lichtleitfaser 6 austretenden fokussierten Laserstrahl 10 mit einem im wesentlichen punktförmigen Strahlfleck auf eine Trennzone in Form einer Trennlinie an der Planglasscheibe 4, entlang derer die Planglasscheibe 4 erwärmt und durch Erzeugung eines thermischen Spannungsrisses durchtrennt werden soll.

Bei diesem Ausführungsbeispiel ist der Bearbeitungskopf 8 so angeordnet, daß die Laserstrahlung 10 unter einem rechten Winkel auf die Oberfläche der Planglasscheibe 4 auftrifft.

Erfindungsgemäß weist die Einrichtung 2 Reflexionsmittel auf, die bei diesem Ausführungsbeispiel einen ersten Reflektor 12 aufweisen, der durch einen Spiegel gebildet ist, dessen Reflexionsfläche zu der Oberfläche der Planglasscheibe 4 im wesentlichen parallel verläuft.

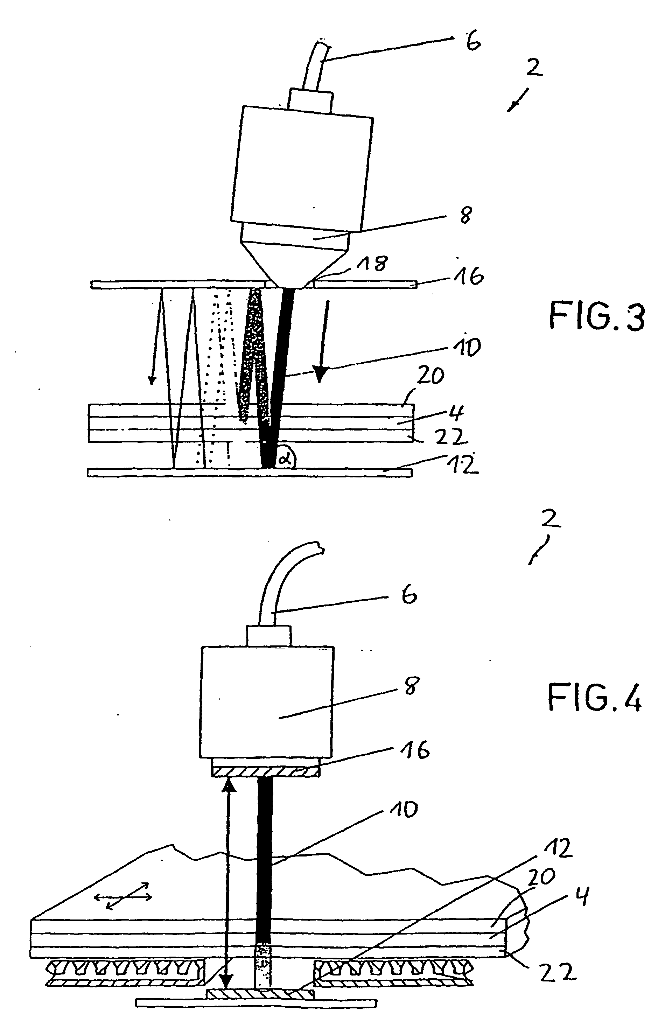

Der erste Reflektor 12 reflektiert durch die Planglasscheibe 4 transmittierte Strahlung auf die Trennlinie, wie dies in Fig. 2 durch einen Pfeil 14 dargestellt ist. Dadurch, daß der Laserstrahl unter einem rechten Winkel auf die Oberfläche der Planglasscheibe 4 und damit auf die Reflexionsfläche des ersten Reflektors 12 auftrifft, sind der einfallende Laserstrahl (vgl. Fig. 1) und der reflektierte Laserstrahl (vgl. Fig. 2) im wesentlichen koinzident und im wesentlichen auf die gleiche Stelle der Trennlinie gerichtet.

Bei Betrieb der Einrichtung 2 trifft der einfallende Laserstrahl 10 auf die Planglasscheibe 4 auf, wird von dieser teilweise absorbiert und teilweise transmittiert und trifft dann auf den ersten Reflektor 12 auf. Der erste Reflektor 12 reflektiert die Laserstrahlung auf die Trennlinie, wie dies aus Fig. 2 ersichtlich ist, so daß die Laserstrahlung die Planglasscheibe erneut durchquert, und zwar an der gleichen Stelle entlang der Trennlinie, die der einfallende Strahl durchquert. Obwohl die Planglasscheibe 4 die Laserstrahlung im wesentlichen transmittiert und nur teilweise absorbiert, ist aufgrund der Reflexion der Laserstrahlung an dem ersten Reflektor 12 eine zur Erzeugung eines thermischen Spannungsrisses ausreichende Erwärmung der Planglasscheibe 4 dadurch ermöglicht, daß die Laserstrahlung das Bauteil 4 zweimal durchquert und hierbei jeweils teilweise von dem Glas absorbiert wird.

Um die Planglasscheibe 4 linienförmig entlang der Trennlinie zu erwärmen, sind in der Zeichnung nicht dargestellte Mittel vorgesehen, die den Bearbeitungskopf 8 während des Bearbeitungsvorganges entsprechend dem Verlauf der Trennlinie relativ zu der Planglasscheibe 4 bewegen. Hierbei kann der erste Reflektor 12 zusammen mit dem Bearbeitungskopf 8 bewegt werden. Falls der erste Reflektor 12 eine ausreichend große Reflexionsfläche aufweist, um während der gesamten Bewegung des Bearbeitungskopfes 8 relativ zu der Planglasscheibe 4 die Laserstrahlung entlang der Trennlinie zu reflektieren, kann der erste Reflektor 12 jedoch auch ortsfest angeordnet sein.

Bei Abkühlung der Planglasscheibe 4 bildet sich ein entlang der Trennlinie ein thermischer Spannungsriß, so daß die Planglasscheibe 4 in der gewünschten Weise entlang der Trennlinie durchtrennt wird.

In Strahlrichtung hinter der Planglasscheibe 4 ist eine weitere Planglasscheibe 13 angeordnet, die gleichzeitig mit der Planglasscheibe 4 bearbeitet wird, so daß sich auch an der Planglasscheibe 13 in einer oben für die Planglasscheibe 4 beschriebenen Weise ein thermischer Spannungsriß bildet. Das Durchtrennen der Planglasscheiben 4, 13 erfolgt also gleichzeitig, so daß das Durchtrennen der Planglasscheiben 4, 13 besonders rationell gestaltet ist. Werden die Planglasscheiben 4, 13 gleichzeitig durchtrennt, so sind die Taktzeiten durch das erfindungsgemäße Verfahren gegenüber einem Verfahren, bei dem die Planglasscheiben 4, 13 nacheinander bearbeitet werden, halbiert.

Zur Bestrahlung der Planglasscheiben 4, 13 entlang der Trennlinie können die Planglasscheiben 4, 13 ortsfest angeordnet sein, während der Bearbeitungskopf 8 bewegt wird. Der Bearbeitungskopf 8 kann jedoch auch ortsfest angeordnet sein, während die Planglasscheiben 4, 13 bewegt werden. Es ist auch möglich, sowohl den Bearbeitungskopf 8 als auch die Planglasscheiben 4, 13 während des Trennvorganges zu bewegen.

In Fig. 3 ist ein zweites Ausführungsbeispiel einer zur Durchführung des erfindungsgemäßen Verfahrens geeigneten Einrichtung 2 dargestellt, das sich von dem Ausführungsbeispiel gemäß Fig. 1 vor allem dadurch unterscheidet, daß die Reflexionsmittel einen zweiten Reflektor 16 aufweisen, der auf der dem Bearbeitungskopf 8 zugewandten Seite der Planglasscheibe 4 angeordnet ist, wobei der erste Reflektor 12 die von dem Laser emittierte Laserstrahlung nach Transmission durch die Planglasscheibe 4 auf den zweiten Reflektor 16 reflektiert und wobei der zweite Reflektor 16 die durch den ersten Reflektor 12 reflektierte Strahlung auf die Trennlinie zurückreflektiert, wie dies aus Fig. 3 ersichtlich ist, so daß die Laserstrahlung mehrfach zwischen den Reflektoren 12, 16 hin- und herreflektiert wird. Hierzu ist in dem zweiten Reflektor 16 eine Öffnung 18 gebildet, durch die der Bearbeitungskopf 8 die Laserstrahlung unter einem spitzen Einfallswinkel α, der kleiner als 90° ist, auf die Planglasscheibe 4 richtet.

Neben der Planglasscheibe 4 werden bei dem Ausführungsbeispiel gemäß Fig. 3 gleichzeitig noch weitere Planglasscheiben bearbeitet, von denen in Fig. 3 lediglich zwei weitere Planglasscheiben dargestellt und mit den Bezugszeichen 20, 22 versehen sind.

Dadurch, daß die Laserstrahlung nicht unter einem rechten Winkel auf den ersten Reflektor 12 einfällt, trifft die von dem ersten Reflektor 12 reflektierte Strahlung an einer Stelle auf die Planglasscheiben 4, 20, 22 auf, die zu einer Stelle, an der die von dem Laser emittierte Strahlung 10 auf die Trennlinie auftrifft, entlang der Trennlinie einen geringen Abstand aufweist. In entsprechender Weise trifft die zwischen dem ersten Reflektor 12 und dem zweiten Reflektor 16 hin- und her reflektierte Strahlung nacheinander an entlang der Trennlinie zueinander gering beabstandeten Stellen auf die Planglasscheiben 4, 20, 22 auf. Der Abstand ist hierbei so gewählt, daß sich die Planglasscheiben 4, 20, 22 entlang der Trennlinie in ausreichendem Maße erwärmen, so daß sich bei einer darauffolgenden Abkühlung in der gewünschten Weise ein Spannungsriß entlang der Trennlinie bildet.

In Fig. 4 ist ein drittes Ausführungsbeispiel einer zur Durchführung des erfindungsgemäßen Verfahrens geeigneten Einrichtung 2 dargestellt, das sich von dem Ausführungsbeispiel gemäß Fig. 1 dadurch unterscheidet, daß der zweite Reflektor 16 durch einen Spiegel gebildet ist, der in Abhängigkeit von der Polarisation der Laserstrahlung diese entweder transmittiert oder reflektiert. Der erste Reflektor 12 ist derart ausgebildet, daß er die Polarisationsrichtung der Laserstrahlung bei Reflexion verändert. Die Polarisation der von dem Laser emittierten einfallenden Laserstrahlung ist so gewählt, daß diese Laserstrahlung von dem zweiten Reflektor 16 zunächst transmittiert wird. Bei der darauffolgenden Reflexion an dem ersten Reflektor 12 wird die Polarisation des Laserlichtes so beeinflußt, daß das Laserlicht bei einem anschließenden Auftreffen auf den zweiten Reflektor 16 reflektiert wird. Daran anschließend wird das Laserlicht mehrfach zwischen dem ersten Reflektor 12 und dem zweiten Reflektor 16 hin- und her reflektiert. Auf diese Weise ist eine schnelle und intensive Erwärmung der Planglasscheiben 4, 20, 22 an der bestrahlten Stelle ermöglicht, obwohl diese die Laserstrahlung im wesentlichen transmittieren.

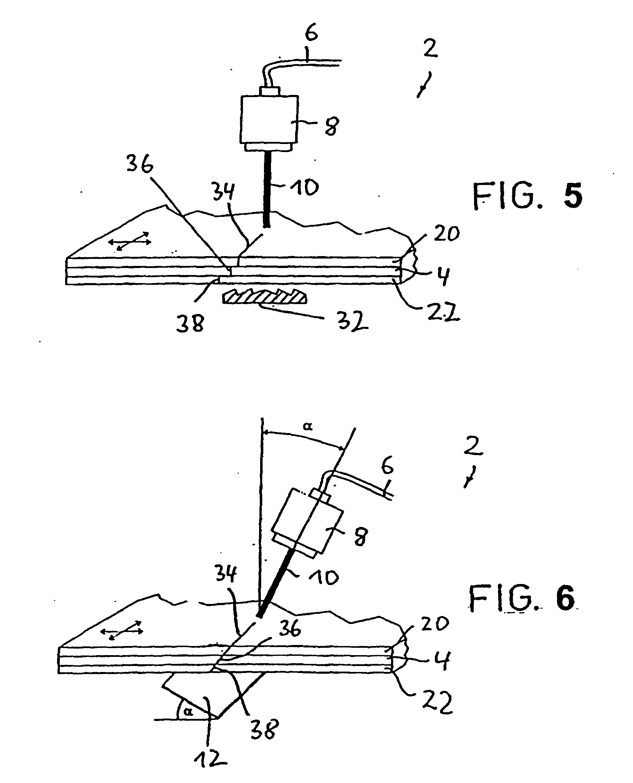

In Fig. 5 ist ein viertes Ausführungsbeispiel einer zur Durchführung des erfindungsgemäßen Verfahrens geeigneten Einrichtung dargestellt, das sich von dem Ausführungsbeispiel gemäß Fig. 4 dadurch unterscheidet, daß als erster Reflektor ein Reflektor 32 verwendet wird, der den einfallenden Laserstrahl 10 so auf die Bauteile 4, 20, 22 reflektiert, daß sich an den Bauteilen 4, 20, 22 ausbildende linienförmige Trennzonen 34, 36, 38 in Richtung der Oberflächen der Bauteile 4, 20, 22 zueinander beabstandet sind, derart, daß die übereinander angeordneten Bauteile 4, 20, 22 treppenstufenartig durchtrennt werden, wie dies aus Fig. 5 ersichtlich ist. Auf diese Weise ist es möglich, die gleichartigen Bauteile 4, 20, 22 in einem einzigen Trennvorgang in unterschiedlicher Weise zu durchtrennen.

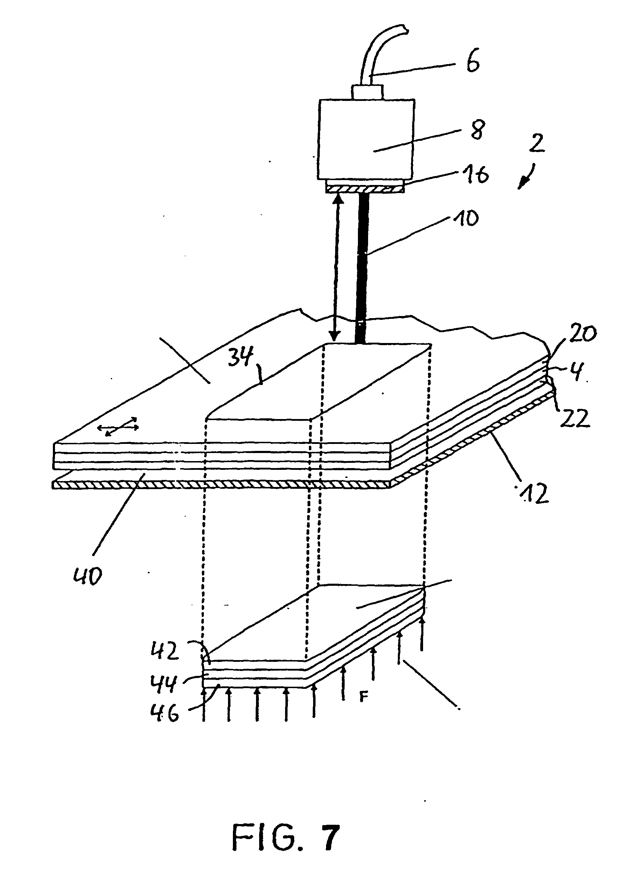

In Fig. 6 ist ein fünftes Ausführungsbeispiel einer zur Durchführung des erfindungsgemäßen Verfahrens geeigneten Einrichtung 2 dargestellt, die sich von dem Ausführungsbeispiel gemäß Fig. 4 dadurch unterscheidet, daß der Laserstrahl 10 schräg auf die Oberfläche der Bauteile 20, 4, 22 gerichtet wird, und zwar bezogen auf die Normale auf die Oberfläche der Bauteile 20, 4, 22 unter einem Winkel α. Ferner ist der erste Reflektor 12 bezogen auf eine zu der Oberfläche der Bauteile 20, 4, 22 parallele Ebene unter dem Winkel α geneigt, so daß der von dem Laser emittierte Laserstrahl 10 und der von dem ersten Reflektor 12 reflektierte Laserstrahl die Bauteile 4, 20, 22 im wesentlichen an derselben Stelle durchqueren. Auf diese Weise bildet sich an den Trennzonen 34, 36, 38 der Bauteile 20, 4, 22 durch den Spannungsriß jeweils eine Fase, wie dies aus Fig. 6 ersichtlich ist. Durch diese Fase ist eine unerwünschte Beschädigung der Bauteile 4, 20, 22 aufgrund von Wärmedehnung verhindert, da die beiderseits der jeweiligen Trennzone 34, 36, 38 liegenden angefasten Schnittkanten im Falle einer Wärmedehnung aufeinander gleiten können.

In Fig. 7 ist ein sechstes Ausführungsbeispiel einer zur Durchführung des erfindungsgemäßen Verfahrens geeigneten Einrichtung 2 dargestellt, bei dem die Bauteile 4, 20, 22 auf einem Luftpolster 40 zu dem ersten Reflektor 12 beabstandet gelagert sind. Bei diesem Ausführungsbeispiel sind die Trennzonen 34, 36, 38 linienförmig ausgebildet und begrenzen eine geschlossene, bei diesem Ausführungsbeispiel im wesentlichen rechteckförmige Kontur, so daß nach Beendigung des Trennvorganges aus den Bauteilen 20, 4, 22 jeweils ein Teil 42, 44, 46 herausgetrennt wird, wie dies im unteren Bereich von Fig. 7 angedeutet ist. Um die Bildung jeweils eines thermischen Spannungsrissses an den Trennzonen 34 bzw. 36 bzw. 38 der Bauteile 20, 4, 22 zu fördern und den thermischen Spannungsriß gezielt zu führen, werden bei diesem Ausführungsbeispiel definiert mechanische Spannungen in die Bauteile 20, 4, 22 eingebracht. Hierzu liegen die Bauteile 20, 4, 22 auf einem nicht dargestellten Auflager auf, dessen Kontur der Kontur der Trennzonen 34, 36, 38 entspricht. Somit sind die Bauteile 20, 4, 22 im Bereich der herauszutrennenden Teile 42, 44, 46 unterstützt, während sie sich an ihren freien Enden unter ihrer Gewichtskraft nach unten durchbiegen. Während des Trennvorganges sinken die Bauteile 20, 4, 22 langsam nach unten, während die herauszutrennenden Teile 42, 44, 46 von der Auflage gehalten werden.

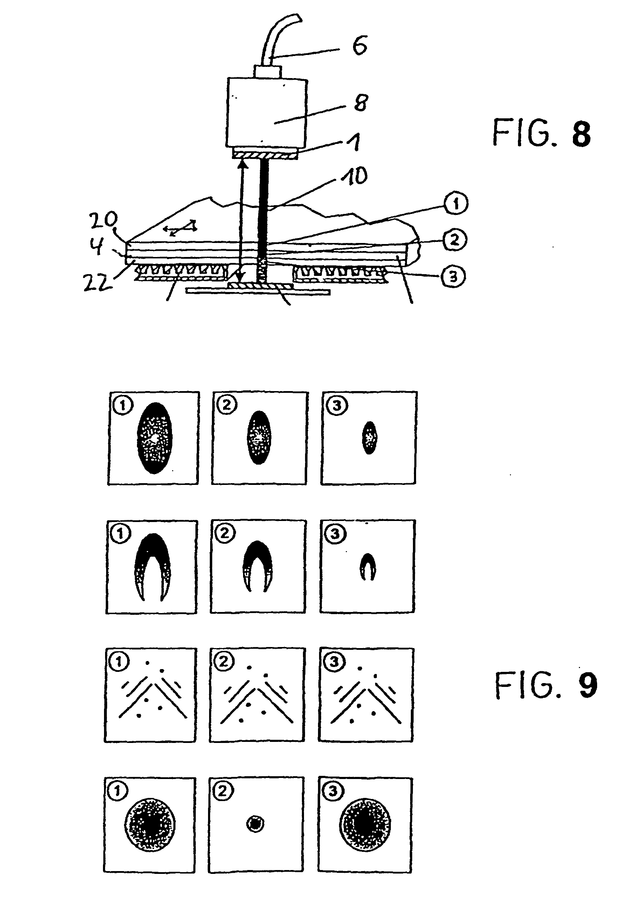

Die Fig. 8 und 9 dienen zur Verdeutlichung möglicher Strahlprofile des Laserstrahles 10.

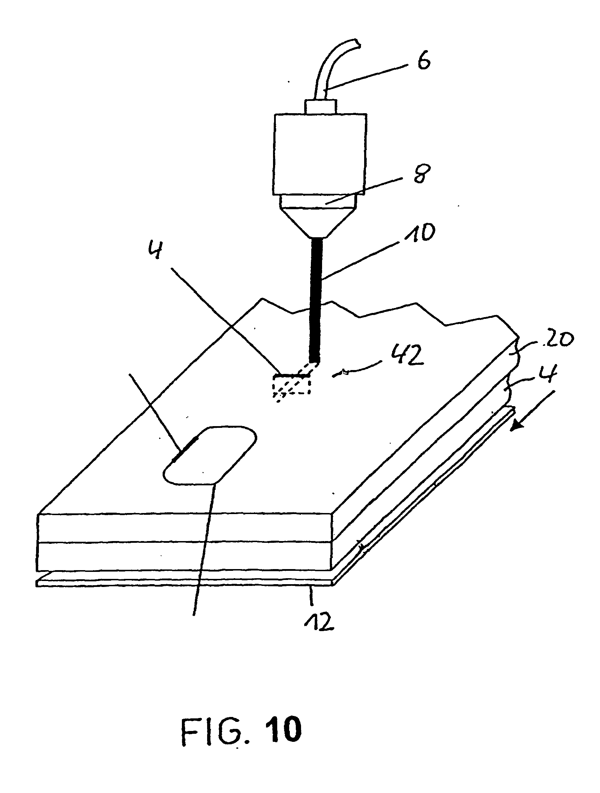

In der ersten Reihe von Fig. 9 ist ganz links ein erstes mögliches Strahlprofil dargestellt, das mittels nicht dargestellter Strahlformungsmittel auf dem Bauteil 20 erzeugt wird. In Fig. 9 ist in der ersten Reihe in der Mitte ein Strahlprofil dargestellt, das gleichzeitig auf dem Bauteil 4 erzeugt wird, während in Fig. 10 in der ersten Reihe rechts ein Strahlprofil dargestellt ist, das gleichzeitig auf dem Bauteil 22 erzeugt wird. Aus einem Vergleich der in der ersten Reihe dargestellten Strahlprofile ist ersichtlich, daß sich durch geeignete Strahlformungsmittel auf den Bauteilen 20, 4, 22 gleichzeitig unterschiedliche Strahlprofile des Laserstrahles 10 erzeugen lassen.

Die Fig. 9 zeigt in der zweiten Reihe ein weiteres Beispiel eines Strahlprofiles, wobei bei diesem Ausführungsbeispiel auf den Bauteilen 4, 20, 22 ebenfalls unterschiedliche Strahlprofile erzeugt werden.

In der dritten Reihe in Fig. 9 ist ein weiteres Beispiel eines Strahlprofiles dargestellt, wobei auf den Bauteilen 20, 4, 22 das gleiche Strahlprofil erzeugt wird.

Schließlich ist in Fig. 10 in der vierten Reihe ein Beispiel eines Strahlprofiles dargestellt, das im wesentlichen kreisförmig ist, wobei auf den Bauteilen 20, 22 das kreisförmige Strahlprofil den gleichen Durchmesser hat, während es auf dem Bauteil 4 einen geringeren Durchmesser hat.

Wie sich aus Fig. 9 ergibt, sind die in den beiden oberen Reihen sowie der unteren Reihe von Fig. 9 dargestellten Strahlprofile achsensymmetrisch, während es sich bei dem in der dritten Reihe dargestellten Strahlprofil um ein asymmetrisches Strahlprofil handelt.

Durch geeignete Wahl des Strahlprofiles, insbesondere eines asymmetrischen Strahlprofiles, läßt sich in den zu bearbeitenden Bauteilen eine beliebige geeignete Temperaturverteilung, beispielsweise eine asymmetrische Temperaturverteilung erzeugen, die bei entsprechender Wahl der Temperaturverteilung zu einer beliebigen geeigneten Spannungsverteilung in den Bauteilen, beispielsweise einer symmetrischen Spannungsverteilung, führt.

Die in Fig. 9 dargestellten Strahlprofile lassen sich unter Verwendung eines Lasers mit einem zeitlich homogenen Strahlquerschnitt erzeugen. Die Strahlprofile lassen sich jedoch auch dadurch erzeugen, daß ein Laserscanner verwendet wird, dessen Strahlfleck kleiner ist als das jeweils erzeugte Strahlprofil. Das Strahlprofil wird bei Verwendung eines solchen Laserscanners dadurch erzeugt, daß der Laserscanner das Bauteil schnell aufeinanderfolgend auf einer dem Strahlprofil entsprechenden Fläche abtastet.

Fig. 10 dient zur Verdeutlichung eines erfindungsgemäßen Verfahrens, bei dem zu Beginn des Trennvorganges mittels der Laserstrahlung an einer Startzone 42 ein Startriß 44 erzeugt wird, von dem im weiteren Verlauf des Trennvorganges die Trennzone ausgeht.

Erfindungsgemäß wird die Intensität und/oder das Strahlprofil und/oder der Fokus des Laserstrahles 10 derart gesteuert, daß der Startriß 44 im wesentlichen ohne Materialabtrag an den Bauteilen 20, 4 gebildet wird. Hierzu wird der Laserstrahl 10 bei der Erzeugung des Startrisses beispielsweise auf einen Bereich unterhalb der Oberflächen der Bauteile 20, 4 fokussiert. Dadurch, daß der Startriß im wesentlichen ohne Materialabtrag an den Bauteilen 20, 4 gebildet wird, kann der Startriß gleichzeitig an den in Strahlrichtung hintereinander angeordneten Bauteilen 20, 4 erzeugt werden. Bei der Erzeugung des Startrisses werden die Bauteile 20, 4 nicht gekühlt. Die Erzeugung des Startrisses erfolgt vielmehr ausschließlich durch Steuerung der Intensität und/oder des Strahlprofiles und/oder des Fokusses des Laserstrahles 10.

## Patentansprüche

1. Verfahren zum Durchtrennen von Bauteilen (4, 13, 20, 22) aus Glas, Keramik, Glaskeramik oder dergleichen durch Erzeugung eines thermischen Spannungsrisses an dem Bauteil an einer Trennzone (34, 36, 38),
bei dem ein Laserstrahl (10) auf die Trennzone gerichtet wird,
bei dem die Wellenlänge der Laserstrahlung so gewählt wird, daß die Laserstrahlung von dem Bauteil (4, 13, 20, 22) unter Teilabsorption teilweise transmittiert wird und
bei dem der Laserstrahl (10) derart auf das Bauteil (4, 13, 20, 22) gerichtet wird, daß der Laserstrahl (10) von dem Bauteil (4, 13, 20, 22) gleichzeitig oder zeitlich aufeinanderfolgend entlang der Trennzone (34, 36, 38) im wesentlichen an der gleichen Stelle oder an zueinander gering beabstandeten Stellen wenigstens zweimal teilweise transmittiert wird,
wobei Reflexionsmittel verwendet werden, die wenigstens einen auf der dem Laser abgewandten Seite des Bauteiles (4, 13, 20, 22) angeordneten ersten Reflektor (12, 32) aufweisen, der durch das Bauteil (4, 13, 20, 22) transmittierte Laserstrahlung auf die Trennzone (34, 36, 38) reflektiert,
**dadurch gekennzeichnet,**
**daß** gleichzeitig wenigstens zwei Bauteile (4, 13, 20, 22) bearbeitet werden, die in Strahlrichtung hintereinander angeordnet sind.

2. Verfahren nach Anspruch 1, bei dem zu Beginn des Trennvorganges mittels der Laserstrahlung in einer Startzone (42) des Spannungsrisses ein Startriß (44) an wenigstens zwei Bauteilen (4, 13, 20, 22) erzeugt wird, von dem im weiteren Verlauf des Trennvorganges 34, 36, 38) die Trennzone ausgeht,
**dadurch gekennzeichnet,**
**daß** die Intensität und/oder das Strahlprofil und/oder der Fokus des Laserstrahles (10) derart gesteuert wird bzw. werden, daß der Startriß (44) im wesentlichen ohne Materialabtrag an den Bauteilen (4, 13, 20, 22) gebildet wird.

3. Verfahren nach Anspruch 2, **dadurch gekennzeichnet, daß** der Laserstrahl (10) bei der Erzeugung des Startrisses (44) auf einen Bereich unterhalb der Oberfläche der Bauteile (4, 13, 20, 22) fokussiert wird.

4. Verfahren nach Anspruch 2, **dadurch gekennzeichnet, daß** der Startriß (44) an einer zu den Rändern der Bauteile (4, 13, 20, 22) beabstandeten Stelle gebildet wird.

5. Verfahren nach Anspruch 2, **dadurch gekennzeichnet, daß** ein Startriß (44) erzeugt wird, der sich in Strahlrichtung der Laserstrahlung im wesentlichen durch die gesamten Bauteile (4, 13, 20, 22) hindurch erstreckt.

6. Verfahren nach Anspruch 2, **dadurch gekennzeichnet, daß** der Laserstrahl (10) zur Weiterführung des von der Startzone (42) ausgehenden thermischen Spannungsrisses auf die Startzone (42) gerichtet und im weiteren Verlauf des Trennvorganges entlang der Trennzone (34, 36, 38) bewegt wird.

7. Verfahren nach Anspruch 2, **dadurch gekennzeichnet, daß** der Laserstrahl (10) zur Weiterführung des von der Startzone (42) ausgehenden thermischen Spannungsrisses auf einen zu der Startzone (42) beabstandeten Bereich gerichtet wird und so gesteuert wird, daß sich der thermische Spannungsriß im weiteren Verlauf des Trennvorganges entlang der Trennzone (34, 36, 38) ausbildet.

8. Verfahren nach Anspruch 1, **dadurch gekennzeichnet, daß** die Bauteile (4, 13, 20, 22) während des Trennvorganges zueinander beabstandet sind oder aneinander anliegen oder miteinander verbunden sind, insbesondere fest miteinander verbunden sind.

9. Verfahren nach Anspruch 1, **dadurch gekennzeichnet, daß** die Bauteile (4, 13, 20, 22) ein Verbundbauteil, insbesondere eine Verbundglasscheibe bilden.

10. Verfahren nach Anspruch 1, **dadurch gekennzeichnet, daß** eines der zu durchtrennenden Bauteile (4, 13, 20, 22) eine Beschichtung eines anderen der zu durchtrennenden Bauteile (4, 13, 20, 22) ist.

11. Verfahren nach Anspruch 1, **dadurch gekennzeichnet, daß** die Bauteile (4, 13, 20, 22) Glasscheiben, insbesondere Planglasscheiben oder rotationssymmetrische Bauteile (4, 13, 20, 22) aus Glas sind.

12. Verfahren nach Anspruch 1, **dadurch gekennzeichnet, daß** die Bauteile (4, 13, 20, 22) aus Borosilikatglas oder Kalk-Natron-Glas bestehen,

13. Verfahren nach Anspruch 1, **dadurch gekennzeichnet, daß** wenigstens ein zweiter Reflektor (16) verwendet wird, der auf der dem Laser zugewandten Seite der Bauteile (4, 13, 20, 22) angeordnet ist, wobei von dem ersten Reflektor (12, 32) die Laserstrahlung durch die Trennzone (34, 36, 38) hindurch auf den zweiten Reflektor (16) reflektiert wird und wobei der zweite Reflektor (16) von dem ersten Reflektor (12, 32) reflektierte Strahlung auf die Trennzone (34, 36, 38) reflektiert.

14. Verfahren nach Anspruch 13, **dadurch gekennzeichnet, daß** die Laserstrahlung von dem zweiten.Reflektor (16) auf den ersten Reflektor (12, 32) zurückreflektiert wird.

15. Verfahren nach Anspruch 1 oder 13, **dadurch gekennzeichnet, daß** der einfallende Laserstrahl (10) und der von dem ersten Reflektor (12, 32) reflektierte Laserstrahl und/oder der von dem ersten Reflektor (12, 32) auf den zweiten Reflektor (16) reflektierte Laserstrahl und der von dem zweiten Reflektor (16) auf den ersten Reflektor (12, 32) zurückreflektierte Laserstrahl entlang der Trennzone (34, 36, 38) im wesentlichen auf die gleiche Stelle oder auf zueinander gering beabstandete Stellen der Bauteile (4, 13, 20, 22) gerichtet werden.

16. Verfahren nach Anspruch 1 oder 13, **dadurch gekennzeichnet, daß** der erste Reflektor (12, 32) und ggf. der zweite Reflektor (16) in Strahlrichtung mit Abstand zu den Bauteilen (4, 13, 20, 22) angeordnet wird bzw. werden.

17. Verfahren nach Anspruch 1, **dadurch gekennzeichnet, daß** als Laser ein Nd:YAG-Laser oder ein Diodenlaser verwendet wird.

18. Verfahren nach Anspruch 1, **dadurch gekennzeichnet, daß** Laserstrahlung mit einer Wellenlänge von etwa 500 bis etwa 5.300 nm verwendet wird.

19. Verfahren nach Anspruch 1, **dadurch gekennzeichnet, daß** das Bauteil (4, 13, 20, 22) und der Laser während des Bearbeitungsvorganges relativ zueinander bewegt werden.

20. Verfahren nach Anspruch 19, **dadurch gekennzeichnet, daß** das Bauteil (4, 13, 20, 22) und der Laser relativ zueinander zweidimensional bewegt werden, wobei das Bauteil (4, 13, 20, 22) in einer ersten Richtung (x-Richtung) und der Laser in einer zu der ersten Richtung (x-Richtung) im wesentlichen senkrechten zweiten Richtung (y-Richtung) bewegt wird.

21. Verfahren nach Anspruch 13, **dadurch gekennzeichnet, daß** als zweiter Reflektor (16) ein Reflektor verwendet wird, der die Laserstrahlung in Abhängigkeit von deren Polarisation entweder transmittiert oder reflektiert, daß die Laserstrahlung von dem Laser von der dem ersten Reflektor abgewandten Seite eingestrahlt wird, wobei die Polarisation der Laserstrahlung derart gewählt wird, daß der zweite Reflektor (16) den einfallenden Strahl (10) transmittiert, und daß die Polarisation der Laserstrahlung von dem ersten Reflektor (12, 32) derart beeinflußt wird, daß der Laserstrahl bei einem darauf folgenden Auftreffen von dem zweiten Reflektor (16) reflektiert wird.

22. Verfahren nach Anspruch 1, **dadurch gekennzeichnet, daß** das Strahlprofil des Laserstrahles durch Strahlformungsmittel geformt wird.

23. Verfahren nach Anspruch 1, **dadurch gekennzeichnet, daß** die Trennzone (34, 36, 38) eine geschlossene Kontur begrenzt.

24. Verfahren nach Anspruch 1, **dadurch gekennzeichnet, daß** ein Teil aus dem Bauteil (4, 13, 20, 22) herausgetrennt wird.

25. Verfahren nach Anspruch 1, **dadurch gekennzeichnet, daß** der Laserstrahl (10) schräg auf das Bauteil (4, 13, 20, 22) gerichtet wird, derart, daß sich an der Trennzone eine Fase an dem Bauteil (4, 13, 20, 22) bildet.

26. Verfahren nach Anspruch 1, **dadurch gekennzeichnet, daß** das Bauteil (4, 13, 20, 22) während des Trennvorganges derart mit mechanischen Spannungen beaufschlagt wird, daß die Bildung des Spannungsrisses gefördert wird.

27. Verfahren nach Anspruch 1, **dadurch gekennzeichnet, daß** das Bauteil (4, 13, 20, 22) während und/oder nach Beendigung des Trennvorganges gekühlt wird.

28. Verfahren nach Anspruch 1, **dadurch gekennzeichnet, daß** ein Laserstrahl (10) mit einem symmetrischen oder asymmetrischen Strahlprofil verwendet wird.

29. Verfahren nach Anspruch 28, **dadurch gekennzeichnet, daß** zur Erzeugung des Strahlprofiles diffraktive, holographische oder brechende Optiken oder ein Laserscanner verwendet werden.

30. Verfahren nach Anspruch 1, **dadurch gekennzeichnet, daß** das Strahlprofil des Laserstrahles (10) während des Trennvorganges zeitlich und/oder räumlich verändert wird.

31. Verfahren nach Anspruch 1, **gekennzeichnet durch** Regelungsmittel zur Regelung der Leistung und/oder des Strahlprofiles und/oder des Fokus des Laserstrahles (10) und/oder der räumlichen Lage des Strahlflecks auf dem Bauteil (4, 13, 20, 22) während des Trennvorganges.

32. Verfahren nach Anspruch 31, **dadurch gekennzeichnet, daß** die Regelungsmittel Sensormittel aufweisen, die mechanische Spannungen in den Bauteilen (4, 13, 20, 22) detektieren, insbesondere eine räumliche Verteilung mechanischer Spannungen in den Bauteilen (4, 13, 20, 22).

33. Verfahren nach Anspruch 31, **dadurch gekennzeichnet, daß** die Regelungsmittel Sensormittel aufweisen, die die Temperatur in den Bauteilen (4, 13, 20, 22) messen, insbesondere eine räumliche Verteilung der Temperatur in den Bauteilen (4, 13, 20, 22).

34. Verfahren nach Anspruch 33, **dadurch gekennzeich** **net, daß** die Sensormittel eine Thermokamera oder ein Pyrometer aufweisen.

35. Verfahren nach Anspruch 1, **dadurch gekennzeichnet, daß** die Trennzonen an in Strahlrichtung aufeinanderfolgenden Bauteilen (4, 13, 20, 22) in Richtung der Oberflächen der Bauteile zueinander beabstandet sind.

## Claims

1. Method for cutting components (4, 13, 20, 22) made of glass, ceramic, glass ceramic or the like by generating a thermal stress crack on the component at a cutting zone (34, 36, 38), in which a laser beam (10) is directed onto the cutting zone, in which the wavelength of the laser radiation is selected such that the laser radiation is partially transmitted by the component (4, 13, 20, 22) with partial absorption and in which the laser beam (10) is directed onto the component (4, 13, 20, 22) in such a way that the laser beam (10) is partially transmitted by the component (4, 13, 20, 22) at least twice, simultaneously or temporally consecutively along the cutting zone (34, 36, 38) substantially at the same location or at locations which are slightly spaced apart from one another, wherein reflection means are used which have at least a first reflector (12, 32) arranged on the side of the component (4, 13, 20, 22) remote from the laser, which reflector reflects laser radiation transmitted by the component (4, 13, 20, 22) onto the cutting zone (34, 36, 38), **characterised in that** at least two components (4, 13, 20, 22) which are arranged one behind the other in the beam direction are processed simultaneously.

2. Method according to claim 1, in which, at the beginning of the cutting process, a starting crack (44) is generated on at least two components (4, 13, 20, 22) by means of the laser radiation in a starting zone (42) of the stress crack, from which starting crack the cutting zone emanates in the further course of the cutting process (34, 36, 38), **characterised in that** the intensity and/or the beam profile and/or the focus of the laser beam (10) is controlled in such a way that the starting crack (44) is formed substantially without material removal on the components (4, 13, 20, 22).

3. Method according to claim 2, **characterised in that** the laser beam (10) is focussed on a region below the surface of the components (4, 13, 20, 22) on generation of the starting crack (44).

4. Method according to claim 2, **characterised in that** the starting crack (44) is formed on a location spaced apart from the edges of the components (4, 13, 20, 22).

5. Method according to claim 2, **characterised in that** a starting crack (44) is generated which extends in the beam direction of the laser radiation substantially through all the components (4, 13, 20, 22).

6. Method according to claim 2, **characterised in that** the laser beam (10) is directed onto the starting zone (42) for continuation of the thermal stress crack emanating from the starting zone (42) and is moved along the cutting zone (34, 36, 38) in the further course of the cutting process.

7. Method according to claim 2, **characterised in that** the laser beam (10) is directed onto a region spaced apart from the starting zone (42) for continuation of the thermal stress crack emanating from the starting zone (42) and is controlled in such a way that the thermal stress crack forms along the cutting zone (34, 36, 38) in the further course of the cutting process.

8. Method according to claim 1, **characterised in that** the components (4, 13, 20, 22), during the cutting process, are spaced apart from one another or abut one another or are connected to one another, in particular are rigidly connected to one another.

9. Method according to claim 1, **characterised in that** the components (4, 13, 20, 22) form a composite component, in particular a composite pane of glass.

10. Method according to claim 1, **characterised in that** one of the components (4, 13, 20, 22) to be cut is a coating of another of the components (4, 13, 20, 22) to be cut.

11. Method according to claim 1, **characterised in that** the components (4, 13, 20, 22) are panes of glass, in particular panes of plane face glass or rotationally symmetrical components (4, 13, 20, 22) made of glass.

12. Method according to claim 1, **characterised in that** the components (4, 13, 20, 22) consist of borosilicate glass or soda-lime glass.

13. Method according to claim 1, **characterised in that** at least a second reflector (16) is used, which is arranged on the side of the components (4, 13, 20, 22) facing the laser, the laser radiation being reflected by the first reflector (12, 32) through the cutting zone (34, 36, 38) onto the second reflector (16) and the second reflector (16) reflecting radiation reflected by the first reflector (12, 32) onto the cutting zone (34, 36, 38).

14. Method according to claim 13, **characterised in that** the laser radiation is reflected back by the second reflector (16) onto the first reflector (12, 32).

15. Method according to claim 1 or 13, **characterised in that** the incident laser beam (10) and the laser beam reflected by the first reflector (12, 32) and/or the laser beam reflected by the first reflector (12, 32) onto the second reflector (16) and the laser beam reflected back by the second reflector (16) onto the first reflector (12, 32) are directed along the cutting zone (34, 36, 38) substantially onto the same location or onto locations of the components (4, 13, 20, 22) which are slightly spaced apart from one another.

16. Method according to claim 1 or 13, **characterised in that** the first reflector (12, 32) and optionally the second reflector (16) is/are arranged in the beam direction spaced apart from the components (4, 13, 20, 22).

17. Method according to claim 1, **characterised in that** an Nd:YAG laser or a diode laser is used as the laser.

18. Method according to claim 1, **characterised in that** laser radiation with a wavelength of about 500 to about 5,300 nm is used.

19. Method according to claim 1, **characterised in that** the component (4, 13, 20, 22) and the laser are moved relative to one another during the processing process.

20. Method according to claim 19, **characterised in that** the component (4, 13, 20, 22) and the laser are moved two-dimensionally relative to one another, the component (4, 13, 20, 22) being moved in a first direction (x-direction) and the laser being moved in a second direction (y-direction) which is substantially perpendicular to the first direction (x-direction).

21. Method according to claim 13, **characterised in that** a reflector is used as the second reflector (16) which either transmits or reflects the laser radiation as a function of its polarisation, **in that** the laser radiation is radiated in by the laser from the side remote from the first reflector, the polarisation of the laser radiation being selected such that the second reflector (16) transmits the incident beam (10) and **in that** the polarisation of the laser radiation is influenced by the first reflector (12, 32) in such a way that the laser beam, on a subsequent impingement, is reflected by the second reflector (16).

22. Method according to claim 1, **characterised in that** the beam profile of the laser beam is formed by beam forming means.

23. Method according to claim 1, **characterised in that** the cutting zone (34, 36, 38) delimits a closed contour.

24. Method according to claim 1, **characterised in that** a part is separated off from the component (4, 13, 20, 22).

25. Method according to claim 1, **characterised in that** the laser beam (10) is directed obliquely onto the component (4, 13, 20, 22) in such a way that a bevel forms on the component (4, 13, 20, 22) at the cutting zone.

26. Method according to claim 1, **characterised in that** the component (4, 13, 20, 22) is acted upon during the cutting process with mechanical stresses in such a way that the formation of the stress crack is promoted.

27. Method according to claim 1, **characterised in that** the component (4, 13, 20, 22) is cooled during and/or after ending of the cutting process.

28. Method according to claim 1, **characterised in that** a laser beam (10) with a symmetrical or asymmetrical beam profile is used.

29. Method according to claim 28, **characterised in that** diffractive, holographic or refracting lens systems or a laser scanner are used to generate the beam profile.

30. Method according to claim 1, **characterised in that** the beam profile of the laser beam (10) is temporally and/or spatially changed during the cutting process.

31. Method according to claim 1, **characterised by** control means for controlling the output and/or the beam profile and/or the focus of the laser beam (10) and/or the spatial position of the beam spot on the component (4, 13, 20, 22) during the cutting process.

32. Method according to claim 31, **characterised in that** the control means have sensor means, which detect mechanical stresses in the components (4, 13, 20, 22), in particular a spatial distribution of mechanical stresses in the components (4, 13, 20, 22).

33. Method according to claim 31, **characterised in that** the control means have sensor means which measure the temperature in the components (4, 13, 20, 22), in particular a spatial distribution of the temperature in the components (4, 13, 20, 22).

34. Method according to claim 33, **characterised in that** the sensor means have a thermocamera or a pyrometer.

35. Method according to claim 1, **characterised in that** the cutting zones on components (4, 13, 20, 22) which follow one another in the beam direction are spaced apart from one another in the direction of the surfaces of the components.

## Revendications

1. Procédé pour découper des composants (4, 13, 20, 22) constitués de verre, de céramique, de vitrocéramique ou d'un matériau de ce genre en générant une fissure de contrainte thermique dans le composant le long d'une zone de découpage (34, 36, 38),
dans lequel un faisceau laser (10) est dirigé vers la zone de découpage,
dans lequel la longueur d'ondes du rayonnement laser est choisie de telle manière que le rayonnement laser est transmis partiellement par le composant (4, 13, 20, 22) avec une absorption partielle et
dans lequel le faisceau laser (10) est dirigé sur le composant (4, 13, 20, 22) de manière à ce que le faisceau laser (10) soit transmis partiellement au moins deux fois par le composant (4, 13, 20, 22) simultanément ou successivement le long de la zone de découpage (34, 36, 38) sensiblement au même endroit ou à des endroits peu éloignés les uns des autres,
des moyens réflecteurs, qui comportent au moins un premier réflecteur (12, 32) disposé du côté du composant (4, 13, 20, 22) opposé au laser, qui refléchit le rayonnement laser transmis par le composant (4, 13, 20, 22) sur la zone de découpage (34, 36, 38), étant utilisés,
**caractérisé en ce que**
au moins deux composants (4, 13, 20, 22), qui sont placés l'un derrière l'autre dans le sens du rayonnement, sont façonnés simultanément.

2. Procédé selon la revendication 1, dans lequel, au début de l'opération de découpage, une fissure de départ (44) est générée dans au moins deux composants (4, 13, 20, 22) au moyen du rayonnement laser dans une zone de départ (42) de la fissure de contrainte, d'où part la zone de découpage pendant la poursuite de l'opération de découpage (34, 36, 38),
**caractérisé en ce que**
l'intensité et/ou le profil de rayonnement et/ou la focalisation du faisceau laser (10) est ou sont commandé(s) de telle manière que la fissure de départ (44) est formée sensiblement sans enlèvement de matière dans les composants (4, 13, 20, 22).

3. Procédé selon la revendication 2, **caractérisé en ce que**, lors de la formation de la fissure de départ (44), le faisceau laser (10) est focalisé sur une zone en dessous de la surface des composants (4, 13, 20, 22).

4. Procédé selon la revendication 2, **caractérisé en ce que** la fissure de départ (44) est formée à un endroit éloigné des bords des composants (4, 13, 20, 22).

5. Procédé selon la revendication 2, **caractérisé en ce que** l'on forme une fissure de départ (44) qui s'étend sensiblement à travers tous les composants (4, 13, 20, 22) dans la direction du faisceau laser.

6. Procédé selon la revendication 2, **caractérisé en ce que**, pour la continuation de la fissure de contrainte thermique partant de la zone de départ (42), le faisceau laser (10) est dirigé vers la zone de départ (42) et il est déplacé le long de la zone de découpage (34, 36, 38) pendant la poursuite de l'opération de découpage.

7. Procédé selon la revendication 2, **caractérisé en ce que**, pour la continuation de la fissure de contrainte thermique partant de la zone de départ (42), le faisceau laser (10) est dirigé vers une zone éloignée de la zone de départ (42) et il est commandé de telle manière que la fissure de contrainte thermique se forme le long de la zone de découpage (34, 36, 38) pendant la poursuite de l'opération de découpage.

8. Procédé selon la revendication 1, **caractérisé en ce que**, pendant l'opération de découpage, les composants (4, 13, 20, 22) sont écartés les uns des autres ou ils sont les uns contre les autres ou ils sont reliés les uns aux autres, en particulier reliés fixement les uns aux autres.

9. Procédé selon la revendication 1, **caractérisé en ce que** les composants (4, 13, 20, 22) forment un composant composite, en particulier une vitre en verre composite.

10. Procédé selon la revendication 1, **caractérisé en ce que** l'un des composants à découper (4, 13, 20, 22) est un revêtement d'un autre des composants à découper (4, 13, 20, 22).

11. Procédé selon la revendication 1, **caractérisé en ce que** les composants (4, 13, 20, 22) sont des vitres en verre, en particulier des vitres en verre plat ou des composants (4, 13, 20, 22) en verre à symétrie de rotation.

12. Procédé selon la revendication 1, **caractérisé en ce que** les composants (4, 13, 20, 22) sont constitués de verre en borosilicate ou de verre à base de chaux, et de bicarbonate de sodium.

13. Procédé selon la revendication 1, **caractérisé en ce que** l'on utilise au moins un deuxième réflecteur (16) qui est disposé du côté des composants (4, 13, 20, 22) tourné vers le laser, le rayonnement laser à travers la zone de découpage (34, 36, 38) étant réfléchi par le premier réflecteur (12, 32) sur le deuxième réflecteur (16) et le deuxième réflecteur (16) réfléchissant le rayonnement réfléchi par le premier réflecteur (12, 32) sur la zone de découpage (34, 36, 38).

14. Procédé selon la revendication 13, **caractérisé en ce que** le rayonnement laser est renvoyé par le deuxième réflecteur (16) sur le premier réflecteur (12, 32).

15. Procédé selon la revendication 1 ou 13, **caractérisé en ce que** le faisceau laser (10) incident et le faisceau laser réfléchi par le premier réflecteur (12, 32) et/ou le faisceau laser réfléchi par le premier réflecteur (12, 32) sur le deuxième réflecteur (16) et faisceau laser renvoyé par le deuxième réflecteur (16) sur le premier réflecteur (12, 32) sont dirigés le long de la zone de découpage (34, 36, 38) sensiblement vers le même endroit ou vers des endroits des composants (4, 13, 20, 22) peu éloignés les uns des autres.

16. Procédé selon la revendication 1 ou 13, **caractérisé en ce que** le premier réflecteur (12, 32) et, le cas échéant, le deuxième réflecteur (16) est ou sont disposé(s) dans le sens de rayonnement à distance des composants (4, 13, 20, 22).

17. Procédé selon la revendication 1, **caractérisé en ce que** l'on utilise comme laser un laser Nd:YAG ou un laser à diodes.

18. Procédé selon la revendication 1, **caractérisé en ce que** l'on utilise un rayonnement laser ayant une longueur d'onde comprise entre environ 500 nm et environ 5.300 nm.

19. Procédé selon la revendication 1, **caractérisé en ce que** le composant (4, 13, 20, 22) et le laser sont déplacés l'un par rapport à l'autre pendant l'opération de façonnage.

20. Procédé selon la revendication 19, **caractérisé en ce que** le composant (4, 13, 20, 22) et le laser sont déplacés l'un par rapport à l'autre de manière bidimensionnelle, le composant (4, 13, 20, 22) étant déplacé dans une première direction (direction x) et le laser dans une seconde direction (direction y) sensiblement perpendiculaire à la première direction (direction x).

21. Procédé selon la revendication 13, **caractérisé en ce que** l'on utilise comme deuxième réflecteur (16) un réflecteur qui transmet ou qui réfléchit le rayonnement laser en fonction de sa polarisation, **en ce que** le rayonnement laser est émis par le laser à partir du côté opposé au premier réflecteur, la polarisation du rayonnement laser étant choisie de telle manière que le deuxième réflecteur (16) transmet le faisceau incident (10), et **en ce que** la polarisation du rayonnement laser provenant du premier réflecteur (12, 32) est influencée de telle manière que le faisceau laser est réfléchi par le deuxième réflecteur (16) lors d'une incidence subséquente.

22. Procédé selon la revendication 1, **caractérisé en ce que** le profil de rayonnement du faisceau laser est formé par des moyens de formage de faisceau.

23. Procédé selon la revendication 1, **caractérisé en ce que** la zone de découpage (34, 36, 38) limite un contour fermé.

24. Procédé selon la revendication 1, **caractérisé en ce qu'**une partie est séparée du composant (4, 13, 20, 22).

25. Procédé selon la revendication 1, **caractérisé en ce que** le faisceau laser (10) est dirigé en biais sur le composant (4, 13, 20, 22) de manière à ce qu'un biseau se forme dans le composant (4, 13, 20, 22) au niveau de la zone de découpage.

26. Procédé selon la revendication 1, **caractérisé en ce que**, pendant l'opération de découpage, le composant (4, 13, 20, 22) est soumis à des contraintes mécaniques de manière à provoquer la formation de la fissure de contrainte.

27. Procédé selon la revendication 1, **caractérisé en ce que** le composant (4, 13, 20, 22) est refroidi pendant et/ou après l'achèvement de l'opération de découpage.

28. Procédé selon la revendication 1, **caractérisé en ce que** l'on utilise un faisceau laser (10) avec un profil de rayonnement symétrique ou asymétrique.

29. Procédé selon la revendication 28, **caractérisé en ce que** l'on utilise des optiques diffractives, holographiques ou réfractives ou un scanner à laser pour générer le profil de rayonnement.

30. Procédé selon la revendication 1, **caractérisé en ce que** l'on fait varier le profil de rayonnement du faisceau laser (10) dans le temps et/ou dans l'espace pendant l'opération de découpage.

31. Procédé selon la revendication 1, **caractérisé par** des moyens de réglage pour le réglage de la puissance et/ou du profil de rayonnement et/ou de la focalisation du faisceau laser (10) et/ou de la position dans l'espace de la trace du faisceau sur le composant (4, 13, 20, 22) pendant l'opération de découpage.

32. Procédé selon la revendication 31, **caractérisé en ce que** les moyens de réglage comportent des moyens de détection qui détectent les contraintes mécaniques dans les composants (4, 13, 20, 22), notamment une répartition spatiale des contraintes mécaniques dans les composants (4, 13, 20, 22).

33. Procédé selon la revendication 31, **caractérisé en ce que** les moyens de réglage comportent des moyens de détection qui mesurent la température dans les composants (4, 13, 20, 22), notamment une répartition spatiale de la température dans les composant (4, 13, 20, 22).

34. Procédé selon la revendication 33, **caractérisé en ce que** les moyens de détection comportent une caméra thermique ou un pyromètre.

35. Procédé selon la revendication 1, **caractérisé en ce que** les zones de découpage sur des composants (4, 13, 20, 22) successifs dans le sens du rayonnement, sont écartées les unes des autres dans la direction des surfaces des composants.
